(19)

**Europäisches Patentamt**
**European Patent Office**
**Office européen des brevets**

(11)  **EP 2 805 561 B1**

(12)  **EUROPEAN PATENT SPECIFICATION**

(45) Date of publication and mention
of the grant of the patent:
**05.09.2018  Bulletin 2018/36**

(51) Int Cl.:
***H04W 72/12*** *(2009.01)*

(21) Application number: **13706730.2**

(86) International application number:
**PCT/IB2013/050276**

(22) Date of filing: **11.01.2013**

(87) International publication number:
**WO 2013/108165 (25.07.2013 Gazette 2013/30)**

(54) **RESOURCE ALLOCATION IN AN ORTHOGONAL FREQUENCY DIVISION MULTIPLEXING SYSTEM**

RESSOURCENZUTEILUNG IN EINEM OFDM-SYSTEM

ALLOCATION DE RESSOURCES DANS UN SYSTÈME DE MULTIPLEXAGE PAR RÉPARTITION ORTHOGONALE DE LA FRÉQUENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2012  US 201213354652**

(43) Date of publication of application:
**26.11.2014  Bulletin 2014/48**

(73) Proprietor: **Telefonaktiebolaget LM Ericsson (publ)**
**164 83 Stockholm (SE)**

(72) Inventors:
• **YU, Derek**
**Kanata, Ontario K2K 2K8 (CA)**

• **LIE CHEN CHEONG, Patrick**
**Kanata, Ontario K2T 1H5 (CA)**
• **MAH, Roger**
**Nepean, Ontario K2J 2K1 (CA)**

(74) Representative: **Zacco Sweden AB**
**P.O. Box 5581**
**114 85 Stockholm (SE)**

(56) References cited:
**EP-A1- 2 244 514          WO-A1-2011/018031
US-A1- 2007 070 894     US-A1- 2007 142 067
US-A1- 2007 218 918**

**Description**

TECHNICAL FIELD

The present invention relates generally to the scheduling of user terminals on a shared channel and, more particularly, to allocation of the shared resources among the user terminals in an Orthogonal Frequency Division Multiplexing (OFDM) system.

BACKGROUND

The Physical Downlink Shared Channel (PDSCH) in Long Term Evolution (LTE) systems is a time and frequency multiplexed channel shared by a plurality of user terminals. User terminals periodically send channel quality indication (CQI) reports to a base station. The CQI reports indicate the instantaneous channel conditions as seen by the receivers in the user terminals. During each 1 ms subframe interval, commonly referred to in the standard as a Transmission Time Interval (TTI), a scheduler at the base station schedules one or more user terminals to receive data on the PDSCH and determines the transmission format for downlink transmissions. The identity of the user terminals scheduled to receive data in a given time interval, and the transmission format, is transmitted to the user terminals on the Physical Downlink Control Channel (PDCCH).

LTE systems use Orthogonal Frequency-Division Multiplexing (OFDM), and schedule user terminals in both time and frequency domains. Thus, the scheduler needs to determine the appropriate time (sub-frames) and frequency (sub-bands) to allocate to a given user in order to satisfy the user QoS (Quality of Service) requirements, while at the same time maximizing the possible cell capacity and coverage. The common approach to scheduling of a shared channel in both time and frequency attempts to share the available PDSCH resource blocks (RBs) equally among the user terminals to be scheduled in a given sub-frame. Each sub-band in the frequency domain corresponds to one or more contiguous RBs. Scheduling is performed in an iterative manner. During each iteration,

RBs are allocated to each user and link adaptation is performed. If any RBs are unused, subsequent iterations are performed to re-allocate the unused RBs to other user terminals.

During the first iteration, the number of RBs that can be allocated to each user is capped. The cap level is determined by dividing the number of available RBs by the number of user terminals to be scheduled. The scheduler begins by allocating up to the maximum number of RBs to each user in order beginning with the highest priority user. In general, the scheduler will allocate to each user the best available RBs based on the channel conditions reported by the user. Link adaptation is performed at the end of each iteration. The scheduler determines the modulation and coding scheme (MCS) for each user based on the number of RBs allocated to the user, the amount of buffered data for the user, and the channel quality associated with the sub-bands allocated to the user. If a user does not need all of its allocated RBs, the scheduling process is repeated and the unused RBs are re-allocated to other user terminals in subsequent iterations. This process repeats until all RBs have been allocated or there is no more data to schedule.

The scheduling process used in the prior art has a number of disadvantages. First, the amount of resources that can be allocated to each user is blindly capped without regard to the actual needs of the user terminals. Second, the allocation of resources to user terminals in order of scheduling priority does not result in the most efficient use of the resources. For example, a resource that is better used by a lower priority user may be assigned to a higher priority user. Therefore, the resource will not be available to the lower priority user when his/her turn for scheduling arrives. Also, the blind cap on resources may cause a resource best used by a higher priority user to be allocated to a lower priority user. Third, the scheduling algorithm is executed sequentially in real-time. Due to the increasingly large number of wireless user terminals being added to the system, it is becoming more difficult to perform sequential scheduling while meeting the stringent time constraints for making scheduling decisions.

Document US 2007/218918 A1 may be construed to disclose a method of scheduling at least one of a plurality of mobile stations for data transmission in a multi-carrier wireless communication system that includes scheduling at least one mobile station on at least one of a plurality of carriers of the multi-carrier wireless communication system based on RF measurements received from the plurality of mobile stations and a Quality of Service (QoS) of the plurality of mobile stations.

Document EP 2 244 514 A1 may be construed to disclose methods for scheduling of uplink transmission and generating transport blocks according to multiple received uplink assignments. Furthermore, the document is also related to the implementation of these methods in hardware and software. To propose strategies for generating plural transport blocks within a given time constraint, the document introduces prioritization of the uplink assignments, so that multiple uplink assignments can be ranked in the mobile terminal in a priority order. The prioritization of the uplink assignments is used to determine the order in which the individual transport blocks corresponding to the uplink assignments are filled, respectively how the data of different logical channels is multiplexed to the transport blocks for transmission in the uplink. Another aspect of the document is to suggest joint logical channel procedures that operate on virtual transport blocks accumulated from the received uplink assignments. One or more such joint logical channel procedure can be performed in parallel.

SUMMARY

The present invention provides a method and an apparatus according to the independent claims for scheduling user terminals in an OFDM system. The scheduling approach implemented by embodiments of the present invention attempts to maximize system capacity while meeting QoS requirements for the user terminals. To perform more efficient scheduling, a per sub-band prioritization is performed before allocation of the sub-bands to the user terminals to generate a pre-allocation schedule. The prioritization is performed independently for each sub-band. The resulting pre-allocation schedule indicates the relative priorities of the user terminals for each sub-band taking into account the channel conditions and specific needs of the user terminals. Based on the pre-allocation schedule, the scheduler can more efficiently allocate the radio resources to the user terminals based on the channel conditions and the specific needs of the user terminals. This scheduling approach is suitable for parallel computing architectures. The use of a parallel computing architecture increases MIPS (million instructions per second) capacity and allows faster scheduling in order to meet stringent real-time constraints.

Exemplary embodiments of the invention comprise methods for scheduling user terminals in an OFDM system. In one exemplary method, the scheduler independently determines a scheduling weight for each user terminal for each of a plurality of sub-bands as a function of a corresponding channel quality weight for the sub-band and service quality weight for the user terminal. Based on the scheduling weights, the scheduler assigns scheduling priorities to the user terminals based on the per sub-band scheduling weights and determines a pre-allocation schedule for each sub-band based on the assigned scheduling priorities. The scheduler then allocates sub-bands to the user terminals based on the sub-band pre-allocation schedule.

Other embodiments of the invention comprise a base station for communicating with a plurality of user terminals over a shared downlink or uplink channel. In one exemplary embodiment, the base station comprises a transceiver circuit for communicating with the mobile terminals and a scheduler, which may comprise one or more scheduling processors, to schedule transmissions to or from the user terminals. The scheduler is configured to determine, for each of a plurality of sub-bands, a scheduling weight for each user terminal as a function of the channel quality metric for the corresponding sub-band and service quality metric for the user terminal. The scheduler is further configured to determine scheduling priority for the user terminals based on the scheduling weights. The scheduling priorities indicate the priority level of each user terminal on each sub-band of interest. The scheduler generates a pre-allocation schedule for each sub-band based on the scheduling priorities of the user terminals and allocates the sub-bands to the user terminals based on the pre-allocation schedule.

The scheduling approach as herein described provides optimal scheduling in a given scheduling interval based on the scheduling weight, resulting in more efficient use of system resources and greater system capacity. The processing intensive operations can be performed in parallel resulting in more efficient hardware utilization and increased scheduling speed. The parallel processes can be extended across multiple sectors within a cell site utilizing a common pool of digital signal processors.

BRIEF DESCRIPTION OF THE DRAWINGS

Figure 1 illustrates an exemplary communication network according to one embodiment.
Figure 2 illustrates a time-frequency grid for uplink and downlink communications.
Figure 3 illustrates an exemplary base station according to an exemplary embodiment.
Figure 4 illustrates an exemplary scheduler for scheduling transmissions to or from user terminals.
Figure 5 illustrates an exemplary scheduling method.
Figure 6 illustrates an exemplary method of updating scheduling weights used in the scheduling method of Fig. 5
Figure 7 illustrates an example allocation procedure used in the scheduling method of Fig. 5
Figure 8 illustrates an exemplary set of scheduling weights for four user terminals in five sub-bands.
Figure 9 illustrates an exemplary sub-band pre-allocation schedule.
Figure 10 illustrates a bitmap representation of a sub-band pre-allocation schedule.

DETAILED DESCRIPTION

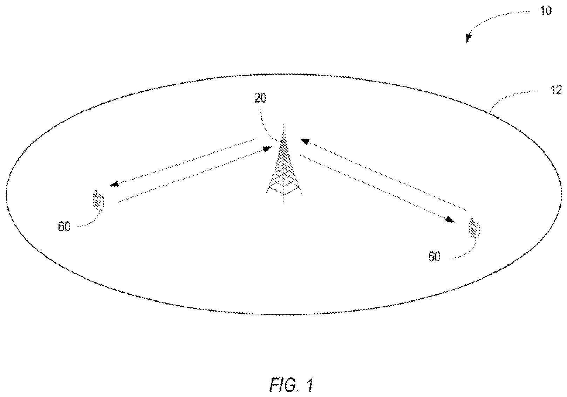

Turning now to the drawings, Figure 1 illustrates an exemplary communication network 10 according to one exemplary embodiment of the present invention. The communication network 10 comprises a plurality of cells 12, though only one cell 12 is shown in Fig. 1. A base station 20 within each cell 12 communicates with the user terminals 60 within the cell 12. The base station 20 transmits data to the user terminals 60 over a downlink channel for downlink communications, and receives data from the user terminals 60 over an uplink channel for uplink communications.

For illustrative purposes, an exemplary embodiment of the present invention will be described in the context of a Long Term Evolution (LTE) system. Those skilled in the art will appreciate, however, that the present invention is more generally applicable to other wireless communication systems, such as WiMAX (IEEE 802.16) systems, where scheduling of frequency resources is performed.

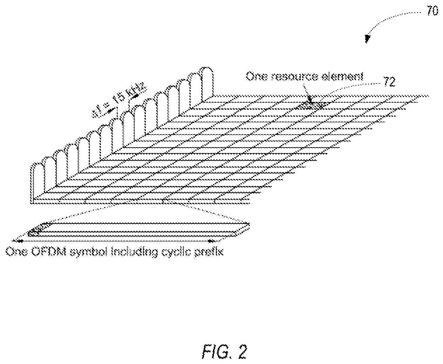

LTE uses Orthogonal Frequency Division Multiplexing (OFDM) in the downlink and Discrete Fourier Transform (DFT) spread OFDM in the uplink. The available radio resources in LTE systems can be viewed as a time-frequency grid. Figure 2 illustrates a portion of an exemplary OFDM time-frequency grid 70 for LTE. Generally speaking, the time-frequency grid 70 is divided into one millisecond subframes. Each subframe includes a number of OFDM symbols. For a normal cyclic prefix (CP) length, suitable for use in situations where multipath dispersion is not expected to be extremely severe, a subframe comprises fourteen OFDM symbols. A subframe comprises twelve OFDM symbols if an extended cyclic prefix is used. In the frequency domain, the physical resources are divided into adjacent subcarriers with a spacing of 15 kHz. The number of subcarriers varies according to the allocated system bandwidth. The smallest element of the time-frequency grid 70 is a resource element 72. A resource element 72 comprises one OFDM subcarrier during one OFDM symbol interval.

In LTE systems, data is transmitted to the user terminals 60 over a downlink transport channel known as the Physical Downlink Shared Channel (PDSCH). The PDSCH is a time and frequency multiplexed channel shared by a plurality of user terminals 60. During each 1 ms subframe interval, commonly referred to as a Transmission Time Interval (TTI), a scheduler for the base station 20 schedules one or more user terminals 60 to receive data on the PDSCH. The user terminals 60 scheduled to receive data in a given TTI are chosen based on Channel Quality Indication (CQI) reports from the user terminals 60. The CQI reports indicate the instantaneous channel conditions as seen by a receiver at the user terminals 60. As described in more detail below, the CQI reports may report CQI separately for different sub-bands. The base station 20 also uses the CQI reports from the user terminals 60 and the buffer status for the user terminals 60 to select the transmission format for downlink transmissions. The transmission format includes, for example, the transport block size, modulation, and coding, which are selected to achieve a desired error performance.

In LTE and other OFDM systems, user terminals 60 are scheduled in both time and frequency domains. The available resources are grouped into resource blocks (RBs). A RB comprises twelve adjacent subcarriers in the frequency domain, and one 0.5 ms slot (one half of one subframe) in the time domain.. In the frequency domain, the RBs are grouped into sub-bands. Each sub-band comprises one or more contiguous RBs. User terminals 60 are scheduled in 1 ms intervals, which is equal to two resource blocks (one subframe) in the time domain. To schedule the user terminals 60, the scheduler 50 needs to determine the appropriate time (sub-frames) and frequency (sub-bands) to allocate a given user in order to satisfy user QoS (Quality of Service) requirements and at the same time maximize the possible cell capacity and coverage.

In general, the scheduler 50 determines which user terminals 60 to schedule in a given TTI, i.e., sub-frame. Then the scheduler 50 allocates the resources blocks for the sub-frame to the scheduled user terminals. In general, it is desirable to allocate the RBs in a sub-band to the user terminal 60 with the best channel conditions, subject to service quality requirements. Allocating resources to user terminals 60 with the best channel conditions allows higher data rates to be achieved, and hence greater system capacity.

In exemplary embodiments of the invention, each user terminal 60 being scheduled is assigned a scheduling weight for each sub-band based on the channel quality reported by the user terminal 60 for that sub-band and the quality of service requirements for the user terminal 60. The user terminals 60 may then be prioritized separately for each sub-band. Per sub-band prioritization enables more optimal scheduling to achieve greater system capacity. Additionally, per sub-band prioritization is well-suited for parallel processing architectures.

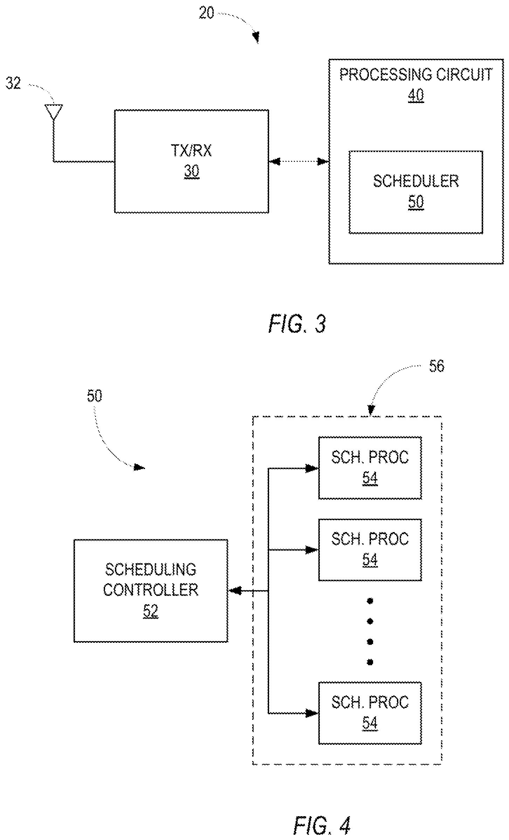

Fig. 3 illustrates an exemplary base station 20 according to one exemplary embodiment. Base station 20 comprises a transceiver 30 coupled to an antenna 32, a processing circuit 40, and a scheduler 50, which may comprise a part of the processing circuit 40. Transceiver 30 comprises a standard cellular transceiver operating according to any known standard using OFDM, such as the LTE, and WiMAX standards. Processing circuit 40 processes signals transmitted and received by the transceiver 30. Typical processing functions performed by the processing circuit 40 include modulation/demodulation, channel coding/decoding, interleaving/de-interleaving, etc. The processing circuit 40 may comprise one or more processors, microcontrollers, hardware circuits, or a combination thereof. Instructions executed by the processing circuit 40 may be stored in a computer readable medium, such as solid state memory (e.g., ROM, Flash memory, etc.). As note above, the processing circuit 40 may include a scheduler 50 to schedule downlink and/or uplink transmissions between the base station 20 and the user terminals 60 in the cell served by the base station 20.

Fig. 4 illustrates the main functional components of the scheduler 50 in more detail. The scheduler 50 comprises a scheduling controller 52 and a plurality of scheduling processors 54 in a processor pool 56. The scheduling controller 52 contains the main scheduling logic and can assign processing tasks to different scheduling processors 54. The scheduling processors 54 within the processing pool 56 may be shared among multiple base station 20. As shown in Fig. 4, the scheduling processors 54 may be arranged in a parallel processing architecture.

In some embodiments, the scheduler 50 may be co-located with the transceiver 30 and perform scheduling for a single cell. In other embodiments, the scheduler 50 may located remotely from the transceiver 30 and perform scheduling for multiple cells.

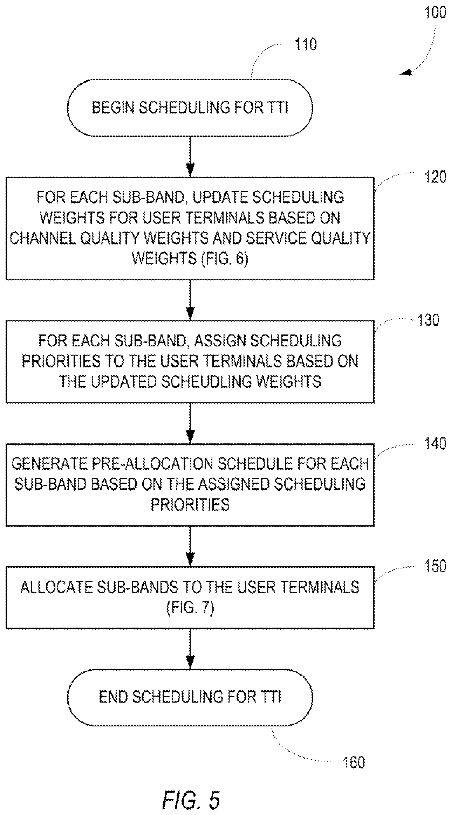

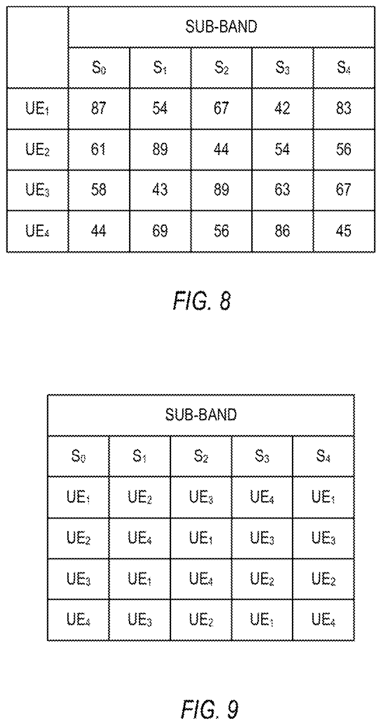

Fig. 5 illustrates an exemplary scheduling procedure 100 implemented by the scheduler 50 for allocating OFDM resources. The scheduling procedure is triggered at a periodic scheduling interval, i.e. TTI. (block 110). In LTE, a TTI is 1 ms, which corresponds to one sub-frame in the OFDM time-frequency grid. The scheduler 50 initially updates the scheduling weights for the user terminals 60 for each available sub-band (block 120). As previously noted, the scheduling weights for the user terminals 60 are computed separately for each sub-band. Fig. 8 illustrates computed scheduling weights for four user terminals 60, denoted as UE1 - UE4, for five sub-bands, denoted as S0 - S4.

The task of computing the scheduling weights may be assigned by the scheduling controller 52 to different scheduling processors 54. In one exemplary embodiment, the scheduling controller 52 assigns each user terminal 60 to a different scheduling processor 54 to compute scheduling weights. In this case, each scheduling processor 54 computes the scheduling weights for an assigned user terminal 60 for all sub-bands. In other embodiments, the scheduling controller 52 may assign each sub-band to a scheduling processor 54 to compute the scheduling weights for the sub-band. In this case, each scheduling processor 54 is assigned to compute scheduling weights for all user terminals 60 for an assigned sub-band.

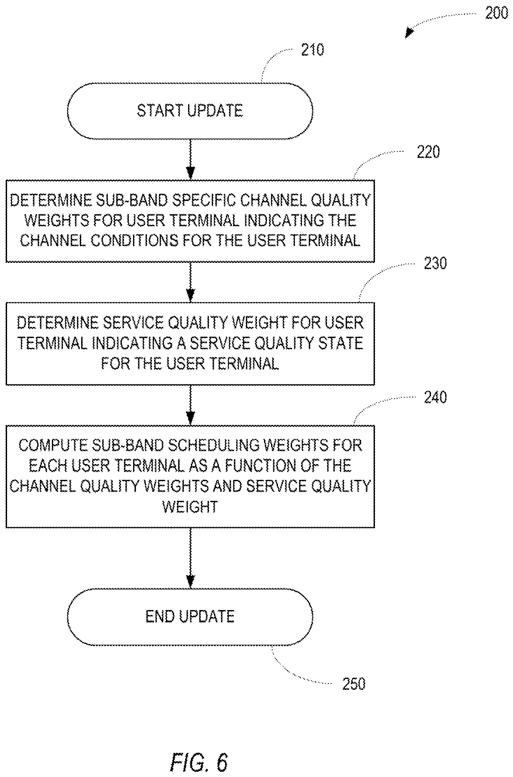

Fig. 6 illustrates an exemplary update procedure 200 for updating the scheduling weights. When the update procedure is triggered (block 210), the scheduling controller 52 determines the sub-band specific channel quality weights for each user terminal 60 (block 220). For each user terminal 60, the channel quality of a specific sub-band will vary over time. The channel quality may vary independently for each sub-band. Therefore, the scheduler 50 may periodically request a channel quality indication (CQI) report from the user terminals 60. The CQI report contains the channel quality measured by the user terminal 60 for each sub-band of interest. The report is processed and each sub-band channel quality weight is updated to reflect the current channel condition for the user terminal 60. Details of CQI reports can be found in Section 7.2 of the LTE 3GPP standard document TS 36.213, "Technical Specification: Physical Layer Procedures (Release 8)." This specification provides the sub-band channel condition update procedure to facilitate scheduling in the frequency domain. The frequency of the CQI reports may vary between user terminals 60 depending on how fast the channel is changing for the user terminals 60. Typically, the frequency of the CQI reports is much slower than the scheduling interval. Therefore, the processing of the CQI reports can be performed in the background as a separate process.

In some embodiments of the invention, a service quality weight is computed for each user terminal 60 (block 230). The service quality weight is a reflection of the service quality state of a given user terminal 60 and indicates how well the user terminal 60 is being served based on its (QoS) requirements. A user terminal 60 that is being underserved according to its QoS requirements will be given a higher service quality weight than a user terminal 60 whose QoS requirements are met. Assigning higher weights to underserved user terminals 60 increases the probability that the user terminal 60 will be scheduled in the next scheduling interval.

The scheduling weights are computed as a function of both the sub-band specific channel quality weights and service quality weights (block 240). The computation of the scheduling weight, denoted $W_{SB}$ is given by:

$$W_{SB} = W_{QoS} + W_{CQ,SB} \qquad (0.1)$$

where $W_{CQ,SB}$ is the sub-band specific channel quality weight and $W_{QoS}$ is the service quality weight, which is the same for all sub-bands. The sub-band specific channel quality weight $W_{CQ,SB}$ is related to a data rate that can be supported within the sub-band. The larger the weight, the larger the data rate that can be supported. The service quality weight $W_{QoS}$ indicates how urgent the need is to schedule the user terminal 60 in order to meet its QoS requirements. The update procedure 200 is then completed (block 250).

Returning to Fig. 5, once the scheduling weights are updated, the scheduling controller 52 assigns scheduling priorities to the user terminals 60 for each sub-band (block 130). The scheduling priorities are determined based on the computed scheduling weights. User terminals 60 with higher scheduling weights are given higher priority for the sub-band. Thus, using the scheduling weights of Fig. 8 as an example, for sub-band S0, the order of priority is UE1 (87), UE2 (61), UE3 (58), and UE4 (44).

The task of computing the sub-band priorities may be assigned by the scheduling controller 52 to different scheduling processors 54. In one exemplary embodiment, each scheduling processor 54 is assigned to compute the user terminal priorities for an assigned sub-band. Thus, the user terminal priorities for each sub-band can be computed in parallel. In other embodiments, the scheduling controller 52 or one of the scheduling processors 54 may compute the scheduling priorities for all of the sub-bands.

Once the scheduling priorities are determined, the scheduling controller 52 generates a consolidated pre-allocation schedule for all of the sub-bands of interest (block 140). Fig. 9 illustrates an exemplary pre-allocation schedule based on the scheduling weights in Fig. 8. The columns of the table in Fig. 9 correspond to sub-bands and the rows correspond to priority levels. In this example, the order of priority from highest to lowest for sub-band S0 is UE1, UE2, UE3, and UE4.

In some embodiments, the scheduling controller 52 consolidates the sub-band prioritizations performed by the individual scheduling processors 54 to generate the pre-allocation schedule. In other embodiments, the scheduling controller 52, or one of the scheduling processors 54, may simultaneously prioritize the user terminals 60 and generate the pre-allocation schedule.

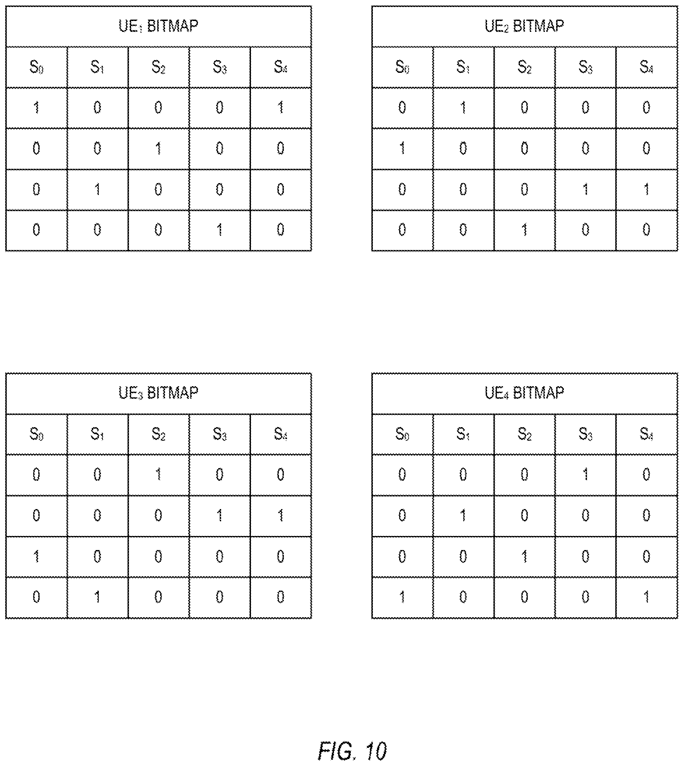

Fig. 10 illustrates a bitmap representation of the pre-allocation schedule. Each bitmap corresponds to one of the user terminals 60. The columns of the bitmap correspond to sub-bands and the rows correspond to priority levels. A "1" indicates the priority of the user terminal for a given sub-band. In the example shown in Fig. 10, UE1 has first priority for sub-bands S0 and S4, second priority for sub-band S2, third priority for sub-band S1, and fourth priority for sub-band S3. The bitmap representation of the pre-allocation schedule conserves storage requirements, and bitmap manipulations using bitwise logical operations also save execution cycles.

Referring again to Fig. 5, after the pre-allocation schedule is generated, the scheduler 50 allocates the sub-bands to the user terminals 60 based on the pre-allocation schedule (block 150). Because the pre-allocated sub-bands for each user terminal 60 are known and are independent for each user terminal 60, the allocation of sub-bands can be performed simultaneously by different scheduling processors 54. The scheduling controller 52 may assign each user terminal 60 to a scheduling processor 54 to perform allocation for the designated sub-bands. Scheduling for the TTI is then completed (block 160).

The scheduler 50 is configured to iteratively allocate the sub-bands to the user terminals 60 in order of the sub-band specific priorities beginning with the user terminals having the highest sub-band specific priority in each sub-band. A user terminal 60 may be pre-allocated multiple sub-bands. In such case, the sub-bands pre-allocated to the user terminal 60 are allocated in the order of best to worst as measured by the scheduling weights. If a user terminal 60 does not require all of the pre-allocated sub-bands, the unused sub-bands can be redistributed to other user terminals 60 in subsequent iterations.

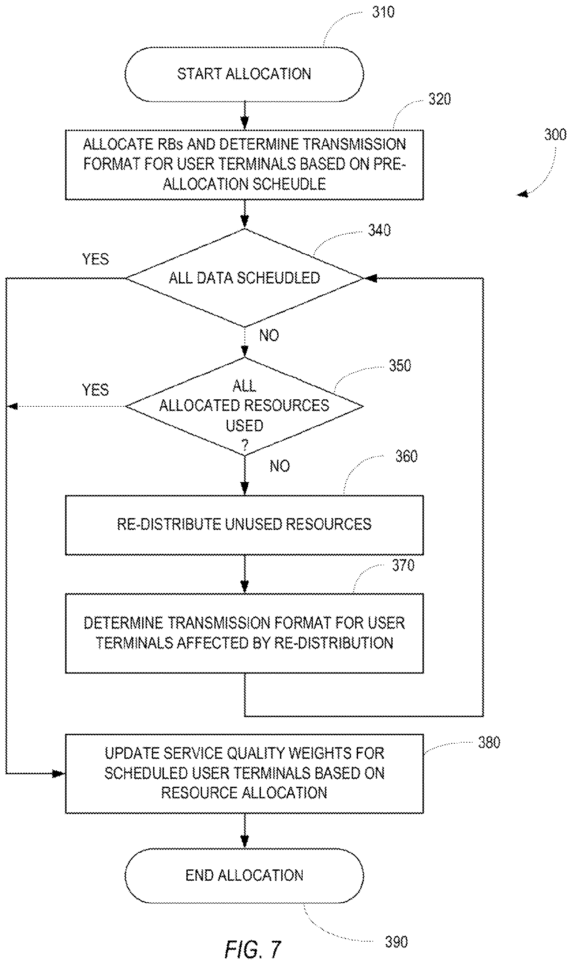

Fig. 7 illustrates an exemplary method 300 for performing resource allocation. The allocation process begins after the generation of the pre-allocation schedule (block 310). The resource allocation step is performed iteratively based on the pre-allocation schedule. During the first iteration, the sub-bands are allocated as specified by the first row of the pre-allocation schedule and the transmission formats are determined based on the allocation (block 320). In the example shown in Figs. 8 and 9, sub-bands S0 and S4 are allocated to UE1, sub-band S1 is allocated to UE2, sub-band S2 is allocated to UE3, and sub-band S3 is allocated to UE4. The scheduler 50 determines the transmission formats, e.g. modulation and coding scheme (MCS), for the user terminals 60 based on the channel quality associated with the allocated sub-bands and the buffer status. This step, commonly referred to as link adaptation, may be performed simultaneously for each user terminal 60. The scheduling controller 52 may assign each user terminal 60 to a scheduling processor 54 to perform the link adaptation step.

Because buffer status is not considered in the pre-allocation schedule, a user terminal 60 may not use all of the resources, i.e. sub-bands, that it was allocated in the pre-allocation schedule. Therefore, after link adaptation is completed for the first iteration, the scheduling controller 52 determines whether all data has been scheduled (block 340) and, if not, whether there are any unused resources remaining (block 350). If so, a second scheduling iteration is performed to redistribute the unused resources (block 360). Thus, a sub-band pre-allocated to a user terminal 60 having insufficient data to use the pre-allocated sub-band may be redistributed to a second user terminal 60 having data in excess of the capacity of its pre-allocated sub-bands. After re-allocation of the unused resources, the transmission format is determined for the user terminals 60 affected by the re-allocation (block 370). This re-allocation process repeats until all resources are assigned or until all buffered data has been scheduled. Once all resources have been assigned and the transmission format determined for all user terminals, the scheduler 50 updates the service quality weights for the user terminals 60, which are used in the next scheduling interval to determine the scheduling weights for the user terminals 60 (block 380). The computation of the service quality weights can be performed simultaneously for all user terminals 60 by different scheduling processors 54. The resource allocation process ends (block 390) after the service quality weights are updated.

By considering the buffer status of the user terminals 60 in advance, it is possible to reduce the number of scheduling iterations in certain situations. In the example of Figs. 8 and 9, assume that UE1 has very limited buffered data and that UE2-UE4 have full buffers. In the normal iterative operations, the unused sub-band (either S0 or S4) would either be allocated to UE2 or UE3 in the second iteration and the whole process requires two iterations. Specifically, if UE1 selected S0, S4 would be allocated to UE3. If it selected S4, then S0 would be allocated to UE2. However, by performing a pre-allocation of UE1's sub-band with two additional Link Adaptations (one for UE2 and one for UE3) in the same iteration, all sub-band allocations to all UEs can be consolidated and finalized in a single iteration. This is achieved at the cost of a single redundant Link Adaptation. In fact, in this example, the redundant Link Adaptation can be avoided as the scheduler 50 already knows which is the better sub-band between S0 and S4 for UE1. The remaining one can be re-assigned right away.

The scheduling approach as herein described provides optimal scheduling in a given scheduling interval based on the scheduling weight, resulting in more efficient use of system resources and greater system capacity. The processing intensive operations can be performed in parallel resulting in more efficient hardware utilization and increased scheduling speed. The parallel processes can be extended across multiple sectors within a cell site utilizing a common pool of digital signal processors. Although the exemplary embodiment as described is used for scheduling downlink transmission, the techniques as described herein may also be applied to schedule uplink transmissions.

The present invention may, of course, be carried out in other ways than those specifically set forth herein without departing from the scope of the appended claims. The present embodiments are to be considered in all respects as illustrative and not restrictive, and all changes coming within the scope of the appended claims are intended to be embraced therein.

## Claims

1. A method performed by a scheduler (50) in a base station (20) for scheduling wireless transmissions to or from a plurality of wireless terminals (60) of an Orthogonal Frequency Division Multiplexing, OFDM, system, said method comprising:

   for each of a plurality of sub-bands, determining (120) a scheduling weight for each user terminal as a function of channel quality metrics indicative of channel conditions for the user terminals for each of said sub-bands and service quality metrics indicative of a service quality state for the user terminals;
   for each of said plurality of sub-bands, assigning (130) sub-band specific scheduling priorities to the user terminals indicating the respective priorities of said user terminals;
   generating (140) a sub-band pre-allocation schedule based on the sub-band specific scheduling priorities;
   allocating (150) sub-bands, to the user terminals in accordance with the sub-band pre-allocation schedule, during a first iteration based on the sub-band specific scheduling priorities; and
   redistributing (360) a pre-allocated sub-band from a first user terminal having insufficient data to use the pre-allocated sub-band to a second user terminal having data in excess of the capacity of its pre-allocated sub-bands.

2. The method of claim 1 wherein allocating sub-bands to the user terminals based on the sub-band pre-allocation schedule comprises allocating sub-bands to the user terminals using two or more parallel processors (54) to perform the allocation for different sub-bands.

3. The method of claim 2 wherein allocating sub-bands to the user terminals using two or more parallel processors further comprises assigning separate processors in a common pool (56) of processors to allocate different sub-bands to the user terminals.

4. The method of claim 1, wherein:

   - assigning scheduling priorities to said user terminals for a sub-band based on the scheduling weights comprises assigning higher priority to user terminals with higher scheduling weights; or
   - determining a scheduling weight for each user terminal is based on sub-band specific channel quality weights for the user terminal.

5. The method of claim 1 further comprising determining transmission formats for the user terminals using two or more parallel processors.

6. Computer-readable medium comprising instructions that, when executed on a processor, configure to the processor to perform all steps of a method according to any one of the preceding method claims.

7. A base station (20) in a wireless communication network (10) of an Orthogonal Frequency Division Multiplexing, OFDM, system comprising:

   a transceiver (30) configured to communicate with a plurality of user terminals (60) over a wireless communication channel; and
a scheduler (50) comprising one or more scheduling processors (54) configured to schedule transmissions to or from the user terminals, said scheduling processor being configured to:

- for each of a plurality of sub-bands, determine a scheduling weight for each user terminal as a function of channel quality metrics indicative of channel qualities for the user terminals and service quality metrics indicative of service quality states for the user terminals;
- for each of said plurality of sub-bands, assign sub-band specific scheduling priorities to the user terminals indicating the respective priorities of said user terminals;
- determine a sub-band pre-allocation schedule based on the scheduling priorities;
- allocate sub-bands, to the user terminals in accordance with the sub-band pre-allocation schedule, during a first iteration based on the sub-band specific scheduling priorities; and
- redistribute a pre-allocated sub-band from a first user terminal having insufficient data to use the pre-allocated sub-band to a second user terminal having data in excess of the capacity of its pre-allocated sub-bands.

8. The base station of claim 7 wherein the scheduler is configured to allocate sub-bands to the user terminals using two or more parallel processors to perform the allocation for different sub-bands.

9. The base station of claim 8 wherein the scheduler is configured to assign separate processors in a pool of processors to allocate different sub-bands to the user terminals.

10. The base station of claim 7 wherein the scheduler is configured to assign higher priority to user terminals with higher scheduling weights.

11. The base station of claim 7 wherein the scheduler is configured to calculate the scheduling weights based on sub-band specific channel quality weights for the user terminals.

12. The base station of claim 7 wherein the scheduler is further configured to determine transmission formats for the user terminals using two or more parallel processors.

13. The base station of claim 12 wherein the scheduler is configured to iteratively allocate the sub-bands to the user terminals in order of the sub-band specific priorities beginning with the user terminals having the highest sub-band specific priority in each sub-band.

14. The base station of claim 13 wherein the scheduler is configured to allocate the sub-bands pre-allocated to the same user terminal in order of the scheduling weights.

15. The base station of claim 7 wherein:

- scheduler is configured to perform the redistribution in a second iteration; or
- scheduler is configured to perform the redistribution during said first iteration.

**Patentansprüche**

1. Verfahren, das von einem Planer (50) in einer Basisstation (20) zum Planen von drahtlosen Übertragungen zu oder von einer Vielzahl von drahtlosen Endgeräten (60) eines Orthogonal Frequency Division Multiplexing-Systems, OFDM-Systems, ausgeführt wird, das Verfahren umfassend:

für jedes einer Vielzahl von Teilbändern, Bestimmen (120) einer Planungsgewichtung für jedes Benutzerendgerät in Abhängigkeit von Kanalqualitätsmetriken, die Kanalbedingungen für die Benutzerendgeräte für jedes der Teilbänder angeben, und Dienstqualitätsmetriken, die einen Dienstqualitätszustand für die Benutzerendgeräte angeben;
für jedes der Vielzahl von Teilbändern, Zuweisen (130) teilbandspezifischer Planungsprioritäten zu den Benutzerendgeräten, welche die jeweiligen Prioritäten der Benutzerendgeräte angeben;
Erzeugen (140) eines Teilband-Vorzuweisungszeitplans auf der Grundlage der teilbandspezifischen Planungsprioritäten;

Zuweisen (150) von Teilbändern zu den Benutzerendgeräten in Übereinstimmung mit dem Teilband-Vorzuweisungszeitplan, bei einer ersten Iteration basierend auf den teilbandspezifischen Planungsprioritäten; und Umverteilen (360) eines vorher zugewiesenen Teilbandes von einem ersten Benutzerendgerät, das unzureichende Daten aufweist, um das vorher zugewiesene Teilband zu verwenden, an ein zweites Benutzerendgerät, das Daten aufweist, welche die Kapazität seiner vorher zugewiesenen Teilbänder überschreitet.

2. Verfahren nach Anspruch 1, wobei das Zuweisen von Teilbändern zu den Benutzerendgeräten basierend auf dem Teilband-Vorzuweisungszeitplan das Zuweisen von Teilbändern zu den Benutzerendgeräten unter Verwendung von zwei oder mehr parallelen Prozessoren (54) umfasst, um die Zuweisung für unterschiedliche Teilbänder durchzuführen.

3. Verfahren nach Anspruch 2, wobei das Zuweisen von Teilbändern zu den Benutzerendgeräten unter Verwendung von zwei oder mehr parallelen Prozessoren ferner das Zuweisen separater Prozessoren in einem gemeinsamen Pool (56) von Prozessoren umfasst, um den Benutzerendgeräten unterschiedliche Teilbänder zuzuweisen.

4. Verfahren nach Anspruch 1, wobei:

- das Zuweisen von Planungsprioritäten zu den Benutzerendgeräten für ein Teilband auf der Basis der Zeitplanungsgewichtungen das Zuweisen höherer Prioritäten zu Benutzerendgeräten mit höheren Zeitplanungsgewichtungen umfasst; oder
- das Bestimmen einer Planungsgewichtung für jedes Benutzerendgerät auf teilbandspezifischen Kanalqualitätsgewichtungen für das Benutzerendgerät basiert.

5. Verfahren nach Anspruch 1, ferner umfassend das Bestimmen von Übertragungsformaten für die Benutzerendgeräte unter Verwendung von zwei oder mehr parallelen Prozessoren.

6. Computerlesbares Medium umfassend Anweisungen, die bei Ausführung auf einem Prozessor den Prozessor zum Durchführen sämtlicher Schritte eines Verfahrens nach einem der vorhergehenden Verfahrensansprüche konfigurieren.

7. Basisstation (20) in einem drahtlosen Kommunikationsnetz (10) eines Orthogonal Frequency Division Multiplexing-Systems, OFDM-Systems, umfassend:

einen Sender/Empfänger (30), der konfiguriert ist, um mit einer Vielzahl von Benutzerendgeräten (60) über einen drahtlosen Kommunikationskanal zu kommunizieren; und
einen Planer (50) umfassend einen oder mehrere Planungsprozessoren (54) zum Planen von Übertragungen von oder zu Benutzerendgeräten, wobei der Planungsprozessor konfiguriert ist zum:

- für jedes einer Vielzahl von Teilbändern, Bestimmen einer Planungsgewichtung für jedes Benutzerendgerät in Abhängigkeit von Kanalqualitätsmetriken, die Kanalqualitäten für die Benutzerendgeräte angeben, und Dienstqualitätsmetriken, die Dienstqualitätszustände für die Benutzerendgeräte angeben;
- für jedes der Vielzahl von Teilbändern, Zuweisen teilbandspezifischer Planungsprioritäten zu den Benutzerendgeräten, welche die jeweiligen Prioritäten der Benutzerendgeräte angeben;
- Bestimmen eines Teilband-Vorzuweisungszeitplans basierend auf den Planungsprioritäten;
- Zuweisen von Teilbändern zu den Benutzerendgeräten in Übereinstimmung mit dem Teilband-Vorzuweisungszeitplan, bei einer ersten Iteration, basierend auf den teilbandspezifischen Planungsprioritäten; und
- Umverteilen eines vorher zugewiesenen Teilbandes von einem ersten Benutzerendgerät, das unzureichende Daten aufweist, um das vorher zugewiesene Teilband zu verwenden, an ein zweites Benutzerendgerät, das Daten Aufweist, welche die Kapazität seiner vorher zugewiesenen Teilbänder überschreiten.

8. Basisstation nach Anspruch 7, wobei der Planer konfiguriert ist, Teilbänder den Benutzerendgeräten unter Verwendung von zwei oder mehr parallelen Prozessoren zuzuweisen, um die Zuweisung für verschiedene Teilbänder durchzuführen.

9. Basisstation nach Anspruch 8, wobei der Planer konfiguriert ist, separate Prozessoren in einem Pool von Prozessoren zuzuweisen, um den Benutzerendgeräten verschiedene Teilbänder zuzuweisen.

10. Basisstation nach Anspruch 7, wobei der Planer konfiguriert ist, um Benutzerendgeräten mit höheren Planungsgewichtungen eine höhere Priorität zuzuweisen.

11. Basisstation nach Anspruch 7, wobei der Planer konfiguriert ist, um die Planungsgewichtungen basierend auf teilbandspezifischen Kanalqualitätsgewichtungen für die Benutzerendgeräte zu berechnen.

12. Basisstation nach Anspruch 7, wobei der Planer ferner konfiguriert ist, um Übertragungsformate für die Benutzerendgeräte unter Verwendung von zwei oder mehr parallelen Prozessoren zu bestimmen.

13. Basisstation nach Anspruch 12, wobei der Planer so konfiguriert ist, dass er iterativ die Teilbänder den Benutzerendgeräten in der Reihenfolge der teilbandspezifischen Prioritäten zuweist, beginnend mit den Benutzerendgeräten mit der höchsten teilbandspezifischen Priorität in jedem Teilband.

14. Basisstation nach Anspruch 13, wobei der Planer konfiguriert ist, um die Teilbänder, die vorher dem gleichen Benutzerendgerät zugeordnet wurden, in der Reihenfolge der Planungsgewichtungen zuzuweisen.

15. Basisstation nach Anspruch 7, wobei:

- der Planer konfiguriert ist, um die Umverteilung in einer zweiten Iteration durchzuführen; oder
- der Planer konfiguriert ist, um die Umverteilung während der ersten Iteration durchzuführen.

## Revendications

1. Procédé mis en oeuvre par un planificateur (50) dans une station de base (20) pour la planification de transmissions sans fil vers ou depuis une pluralité de terminaux sans fil (60) d'un système de multiplexage par répartition orthogonale de la fréquence, OFDM, ledit procédé comprenant :

pour chaque sous-bande d'une pluralité de sous-bandes, la détermination (120) d'une pondération de planification pour chaque terminal d'utilisateur en fonction de mesures de qualité de canal indiquant des conditions de canal pour les terminaux d'utilisateur pour chacune desdites sous-bandes et de mesures de qualité de service indiquant un état de qualité de service pour les terminaux d'utilisateur ;
pour chaque sous-bande de ladite pluralité de sous-bandes, l'attribution (130) de priorités de planification spécifiques de sous-bande aux terminaux d'utilisateur indiquant les priorités respectives desdits terminaux d'utilisateur ;
la génération (140) d'une planification de pré-allocation de sous-bande sur la base des priorités de planification spécifiques de sous-bande ;
l'allocation (150) de sous-bandes, aux terminaux d'utilisateur conformément à la planification de pré-allocation de sous-bande, pendant une première itération sur la base des priorités de planification spécifiques de sous-bande ; et
la redistribution (360) d'une sous-bande, pré-allouée depuis un premier terminal d'utilisateur ayant une quantité de données insuffisante pour utiliser la sous-bande pré-allouée, vers un deuxième terminal d'utilisateur ayant une quantité de données supérieure à la capacité de ses sous-bandes pré-allouées.

2. Procédé selon la revendication 1, dans lequel l'allocation de sous-bandes aux terminaux d'utilisateur sur la base de la planification de pré-allocation de sous-bande comprend l'allocation de sous-bandes aux terminaux d'utilisateur en utilisant deux processeurs parallèles (54) ou davantage pour mettre en oeuvre l'allocation pour des sous-bandes différentes.

3. Procédé selon la revendication 2, dans lequel l'allocation de sous-bandes aux terminaux d'utilisateur en utilisant deux processeurs parallèles ou davantage comprend en outre l'attribution de processeurs indépendants dans un ensemble commun (56) de processeurs pour allouer des sous-bandes différentes aux terminaux d'utilisateur.

4. Procédé selon la revendication 1, dans lequel :

- l'attribution de priorités de planification auxdits terminaux d'utilisateur pour une sous-bande sur la base de pondérations de planification comprend l'attribution d'une priorité plus élevée à des terminaux d'utilisateur ayant des pondérations de planification plus élevées ; ou
- la détermination d'une pondération de planification pour chaque terminal d'utilisateur est basée sur des pondérations de qualité de canal spécifiques de sous-bande pour le terminal d'utilisateur.

5. Procédé selon la revendication 1, comprenant en outre la détermination de formats de transmission pour les terminaux d'utilisateur en utilisant deux processeurs parallèles ou davantage.

6. Support lisible par ordinateur comprenant des instructions qui, lorsqu'elles sont exécutées sur un processeur, configurent le processeur pour mettre en oeuvre toutes les étapes d'un procédé selon l'une quelconque des revendications de procédé précédentes.

7. Station de base (20) dans un réseau de communication sans fil (10) d'un système de multiplexage par répartition orthogonale de la fréquence, OFDM, comprenant :

un émetteur-récepteur (30) configuré pour communiquer avec une pluralité de terminaux d'utilisateur (60) sur un canal de communication sans fil ; et
un planificateur (50) comprenant un ou plusieurs processeurs de planification (54) configurés pour planifier des transmissions vers ou depuis les terminaux d'utilisateur, ledit processeur de planification étant configuré de façon à :

- pour chaque sous-bande d'une pluralité de sous-bandes, déterminer une pondération de planification pour chaque terminal d'utilisateur en fonction de mesures de qualité de canal indiquant des qualités de canal pour les terminaux d'utilisateur et de mesures de qualité de service indiquant des états de qualité de service pour les terminaux d'utilisateur ;
- pour chaque sous-bande de ladite pluralité de sous-bandes, attribuer des priorités de planification spécifiques de sous-bande aux terminaux d'utilisateur indiquant les priorités respectives desdits terminaux d'utilisateur ;
- déterminer une planification de pré-allocation de sous-bande sur la base des priorités de planification ;
- allouer des sous-bandes, aux terminaux d'utilisateur conformément à la planification de pré-allocation de sous-bande, pendant une première itération sur la base des priorités de planification spécifiques de sous-bande ; et
- redistribuer une sous-bande pré-allouée, depuis un premier terminal d'utilisateur ayant une quantité de données insuffisante pour utiliser la sous-bande pré-allouée, vers un deuxième terminal d'utilisateur ayant une quantité de données supérieure à la capacité de ses sous-bandes pré-allouées.

8. Station de base selon la revendication 7, dans laquelle le planificateur est configuré pour allouer des sous-bandes aux terminaux d'utilisateur en utilisant deux processeurs parallèles ou davantage pour mettre en oeuvre l'allocation pour des sous-bandes différentes.

9. Station de base selon la revendication 8, dans laquelle le planificateur est configuré pour attribuer des processeurs indépendants dans un ensemble de processeurs pour allouer des sous-bandes différentes aux terminaux d'utilisateur.

10. Station de base selon la revendication 7, dans laquelle le planificateur est configuré pour attribuer une priorité plus élevée aux terminaux d'utilisateur ayant des pondérations de planification plus élevées.

11. Station de base selon la revendication 7, dans laquelle le planificateur est configuré pour calculer les pondérations de planification sur la base de pondérations de qualité de canal spécifiques de sous-bande pour les terminaux d'utilisateur.

12. Station de base selon la revendication 7, dans laquelle le planificateur est en outre configuré pour déterminer des formats de transmission pour les terminaux d'utilisateur en utilisant deux processeurs parallèles ou davantage.

13. Station de base selon la revendication 12, dans laquelle le planificateur est configuré pour allouer itérativement les sous-bandes aux terminaux d'utilisateur dans l'ordre des priorités spécifiques de sous-bande en commençant par les terminaux d'utilisateur ayant la priorité spécifique de sous-bande la plus élevée dans chaque sous-bande.

14. Station de base selon la revendication 13, dans laquelle le planificateur est configuré pour allouer les sous-bandes pré-allouées au même terminal d'utilisateur dans l'ordre des pondérations de planification.

**15.** Station de base selon la revendication 7, dans laquelle :

- le planificateur est configuré pour mettre en oeuvre la redistribution dans une deuxième itération ; ou
- le planificateur est configuré pour mettre en oeuvre la redistribution pendant ladite première itération.

FIG. 1

FIG. 2

*FIG. 3*

*FIG. 4*

*FIG. 5*

200

210

START UPDATE

220

DETERMINE SUB-BAND SPECIFIC CHANNEL QUALITY WEIGHTS FOR USER TERMINAL INDICATING THE CHANNEL CONDITIONS FOR THE USER TERMINAL

230

DETERMINE SERVICE QUALITY WEIGHT FOR USER TERMINAL INDICATING A SERVICE QUALITY STATE FOR THE USER TERMINAL

240

COMPUTE SUB-BAND SCHEDULING WEIGHTS FOR EACH USER TERMINAL AS A FUNCTION OF THE CHANNEL QUALITY WEIGHTS AND SERVICE QUALITY WEIGHT

END UPDATE

250

*FIG. 6*

FIG. 7

| | SUB-BAND | | | | |
|---|---|---|---|---|---|
| | $S_0$ | $S_1$ | $S_2$ | $S_3$ | $S_4$ |
| $UE_1$ | 87 | 54 | 67 | 42 | 83 |
| $UE_2$ | 61 | 89 | 44 | 54 | 56 |
| $UE_3$ | 58 | 43 | 89 | 63 | 67 |
| $UE_4$ | 44 | 69 | 56 | 86 | 45 |

*FIG. 8*

| SUB-BAND | | | | |
|---|---|---|---|---|
| $S_0$ | $S_1$ | $S_2$ | $S_3$ | $S_4$ |
| $UE_1$ | $UE_2$ | $UE_3$ | $UE_4$ | $UE_1$ |
| $UE_2$ | $UE_4$ | $UE_1$ | $UE_3$ | $UE_3$ |
| $UE_3$ | $UE_1$ | $UE_4$ | $UE_2$ | $UE_2$ |
| $UE_4$ | $UE_3$ | $UE_2$ | $UE_1$ | $UE_4$ |

*FIG. 9*

| UE$_1$ BITMAP | | | | |
|---|---|---|---|---|
| S$_0$ | S$_1$ | S$_2$ | S$_3$ | S$_4$ |
| 1 | 0 | 0 | 0 | 1 |
| 0 | 0 | 1 | 0 | 0 |
| 0 | 1 | 0 | 0 | 0 |
| 0 | 0 | 0 | 1 | 0 |

| UE$_2$ BITMAP | | | | |
|---|---|---|---|---|
| S$_0$ | S$_1$ | S$_2$ | S$_3$ | S$_4$ |
| 0 | 1 | 0 | 0 | 0 |
| 1 | 0 | 0 | 0 | 0 |
| 0 | 0 | 0 | 1 | 1 |
| 0 | 0 | 1 | 0 | 0 |

| UE$_3$ BITMAP | | | | |
|---|---|---|---|---|
| S$_0$ | S$_1$ | S$_2$ | S$_3$ | S$_4$ |
| 0 | 0 | 1 | 0 | 0 |
| 0 | 0 | 0 | 1 | 1 |
| 1 | 0 | 0 | 0 | 0 |
| 0 | 1 | 0 | 0 | 0 |

| UE$_4$ BITMAP | | | | |
|---|---|---|---|---|
| S$_0$ | S$_1$ | S$_2$ | S$_3$ | S$_4$ |
| 0 | 0 | 0 | 1 | 0 |
| 0 | 1 | 0 | 0 | 0 |
| 0 | 0 | 1 | 0 | 0 |
| 1 | 0 | 0 | 0 | 1 |

*FIG. 10*

**EP 2 805 561 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007218918 A1

- EP 2244514 A1

**Non-patent literature cited in the description**

- Technical Specification: Physical Layer Procedures (Release 8). *TS 36.213*